**Europäisches Patentamt**

(19) **European Patent Office**

**Office européen des brevets**

(11) Veröffentlichungsnummer: **0 150 268**
**B1**

(12) # EUROPÄISCHE PATENTSCHRIFT

(45) Veröffentlichungstag der Patentschrift:
04.10.89

(51) Int. Cl.⁴: **G 01 B 11/16**

(21) Anmeldenummer: **84111956.3**

(22) Anmeldetag: **24.03.82**

(54) **Messanordnung zum Feststellen von Rissen.**

(30) Priorität: **25.02.82 DE 3206656**

(43) Veröffentlichungstag der Anmeldung:
**07.08.85 Patentblatt 85/32**

(45) Bekanntmachung des Hinweises auf die Patenterteilung:
**04.10.89 Patentblatt 89/40**

(84) Benannte Vertragsstaaten:
**FR GB SE**

(56) Entgegenhaltungen:
**DE-B-2 937 824**
**GB-A-1 570 511**

**STRAIN, Band 16, Nr. 4, Oktober 1980, Seiten 150-154, Edingburg, GB; K.F. HALE et al.: "The application of optical fibres as witness devices for the detection of plastic strain and cracking"**

(73) Patentinhaber: **Messerschmitt- Bölkow- Blohm GmbH, Hünefeldstrasse 1-5, D-2800 Bremen 1 (DE)**

(72) Erfinder: **Malek, Samir, Dr., Auf der Koppel 40, D-2822 Schwanewede- Leuchtenburg (DE)**
Erfinder: **Hofer, Bernd, Dr., Osnabrücker Strasse 11, D-2874 Lemwerder (DE)**

**Beschreibung**

Die Erfindung bezieht sich auf eine Meßanordnung zum Feststellen von Rissen in Prüflingen mit einem zum Auslösen einer Rißanzeige dienenden und am Prüfling anbringbaren Rißdetektor, der aus auf den Prüfling auf klebbaren und über einen Lichteinkoppler mit Licht versorgbaren Lichtleitfasern besteht.

Bei einer aus der deutschen Patentanmeldung DE-A-3 111 858.5 bekannten Meßanordnung besteht der Rißdetektor aus Lichtleitfasern, welche auf den jeweils zu untersuchenden Prüfling aufgeklebt werden. Mittels eines Lichteinkopplers wird diesen Lichtleitfasern Licht zugeführt, deren Transmission an den anderen Enden mit einem Lichtdetektor überwacht wird. Ein in einer Lichtleitfaser aufgrund eines Risses entstandener Bruch reduziert die Lichttransmission in dieser Faser sehr stark und hat daher zur Folge, daß der Lichtdetektor hierauf anspricht und ein Signal zur Auslösung einer Rißanzeige erzeugt. Von besonderem Vorteil ist dabei die Tatsache, daß durch den unmittelbaren Kontakt der Lichtleitfasern mit der Bauteiloberfläche sich eine hohe Nachweisempfindlichkeit ergibt und daß Korrosionsprobleme nicht auftreten können.

Rißdetektoren dieser Art haben den Vorteil, daß eine einmal ausgelöste Rißanzeige irreversibel ist, so daß ein entstandener Riß auch nach Entlastung des Prüflings angezeigt wird. Die vorliegende Erfindung geht von der zuvor angegebenen Patentanmeldung aus und zeigt eine Weiterentwicklung, die dadurch gekennzeichnet ist, daß die Lichtleitfasern in gleicher Höhe eine Unterbrechung aufweisen, daß ein Lichtablenker vorgesehen und so angeordnet ist, daß ein von ihm abgelenkter Lichtstrahl die Lichtleitfasern in Höhe der Unterbrechung überstreicht, so daß in beide Teile jeweils einer Faser Licht eingekoppelt wird und daß den Enden der Lichtleitfasern Fotodetektoren zugeordnet sind, deren Ausgangssignale in einer Auswerteschaltung zur Erzeugung einer Rißfortschrittsanzeige verarbeitet werden.

Bei der erfindungsgemäßen Weiterentwicklung erfolgt keine ständige Überwachung des Lichtdurchganges in den einzelnen Lichtleitfasern, sondern eine durch den Lichtablenker bestimmte, intervallmäßige Überwachung. Auf diese Weise kann der Rißfortschritt auf einfache Weise durch die Zunahme der gebrochenen Lichtleitfasern ermittelt werden. Auf dem Prüfling werden dabei zahlreiche Lichtleitfasern in gleichmäßigem Abstand und parallel angebracht, wobei die Unterbrechungen zur Lichteinkopplung hinreichend weit von zu erwartenden Rissen vorgenommen werden.

Für den Lichtablenker kann eine Drehspiegelanordnung eingesetzt werden, bestehend aus einer mit gleichmäßigen Abflachungen versehenen Spiegelrolle. Außerdem ist es zweckmäßig, für die Lichtquelle einen Laser einzusetzen, dessen Lichtstrahl durch eine astigmatische Linse in Ablenkrichtung fokussiert und in Faserrichtung defokussiert ist. Hierdurch wird gewährleistet, daß beim Überstreichen der Unterbrechungen Licht jeweils nur in eine Faser eingekoppelt wird, so daß die Fotodetektoren jeweils nur ein vom Lichtdurchgang abhängiges Signal einer Lichtleitfaser zu erzeugen vermögen. Die Fotodetektoren können dabei aus mehreren zu einem länglichen Bauteil zusammengefaßten Fotodioden bestehen und jeweils einer Seite der Faserenden zugeordnet werden. Außerdem kann die Auswerteschaltung einen Rechner umfassen, der aus den zugeführten Signalen der Fotodetektoren eine den Rißfortschritt anzeigende Größe ermittelt.

Die Erfindung wird anhand der beiliegenden Zeichnung näher erläutert. Es zeigen:

Fig. 1a bis 1b das Prinzip der erfindungsgemäßen Weiterentwicklung,
Fig. 2 ein mit zahlreichen Lichtleitfasern versehenes Bauteil,
Fig. 3a bis 3b zwei Signaldiagramme,
Fig. 4 ein durch einen Lichtablenker periodisch überwachtes Bauteil und
Fig. 5 ein Rißfortschrittsdiagramm.

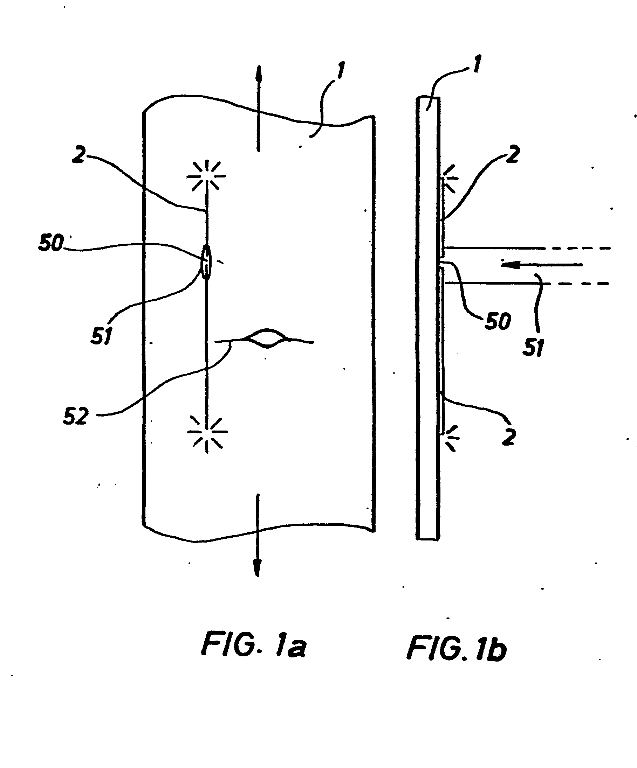

Wie die Darstellung nach Fig. 1a und die Seitenansicht dazu nach Fig. 1b zeigen, ist auf einen Prüfling 1 eine Lichtleitfaser 2 haftend aufgebracht. Diese Lichtleitfaser 2 weist eine außerhalb der Mitte liegende Unterbrechung 50 auf, welche durch einen beide Faserteile erfassenden Lichtstrahl 51 beleuchtet wird. Wie zu erkennen, ist der Lichtstrahl 51 in Faserrichtung defokussiert und senkrecht dazu fokussiert. Hierdurch wird sichergestellt, daß der Lichtstrahl beim Überstreichen mehrerer, mit geringem Abstand nebeneinander angeordneter Lichtleitfasern jeweils nur eine Faser erfaßt. Im Prüfling 1, welcher - wie durch Pfeile angedeutet - belastet wird, ist ein Riß 52 entstanden, der den unteren Teil der Lichtleitfaser zu unterwandern versucht. Aus den Darstellungen nach Fig. 1a und Fig. 1b ist darüber hinaus zu erkennen, daß die durch den Lichtstrahl 51 beleuchtete Unterbrechung 50 ein Leuchten an den beiden Enden der Lichtleitfasern 2 zur Folge hat. Ein Bruch in dem unteren Faserteil aufgrund des Risses 52 ist irreversibel und führt zu einem stark verringerten Leuchten an diesem Ende. Mit einem Fotodetektor kann diese Lichtänderung erfaßt und zur Auslösung einer Rißanzeige bzw. zur Anzeige des Rißfortschrittes benutzt werden.

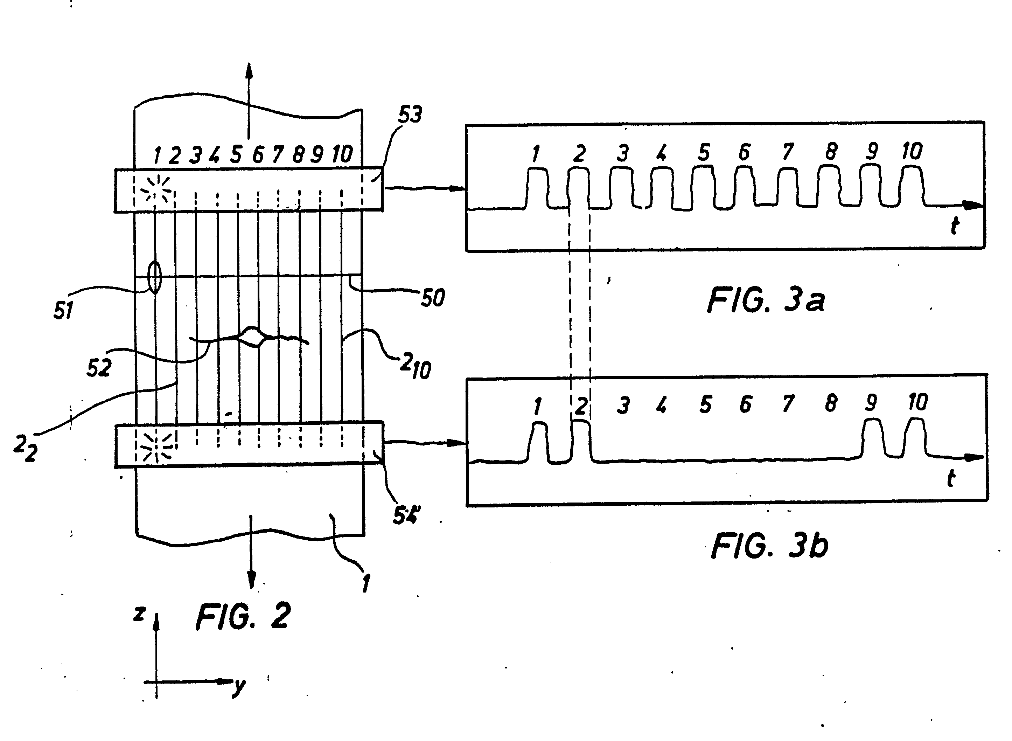

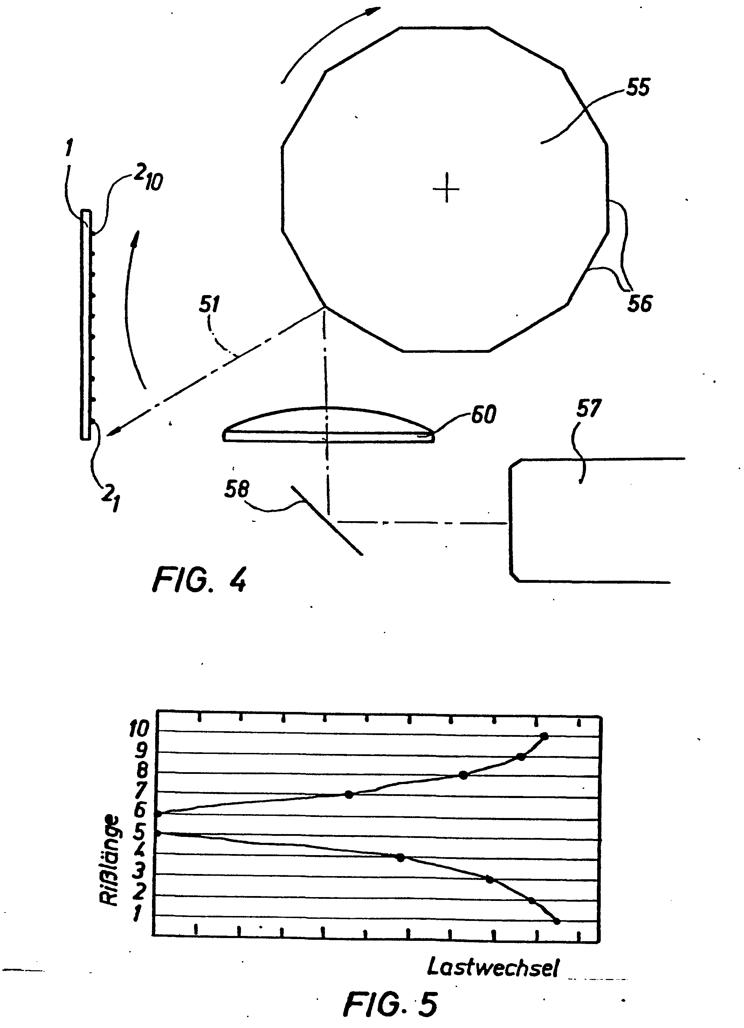

In der Darstellung nach Fig. 2 ist ebenfalls ein Prüfling 1 zu sehen, auf dem zehn Lichtleitfasern $2_1$, $2_2$, ..... $2_{10}$ aufgeklebt sind. Diese Lichtleitfasern 2 sind jeweils mit einer als Strich angedeuteten Unterbrechung 50 versehen, welche zum Beispiel nach dem Aufbringen der Fasern durch Überstreichen mit einem scharfen Gegenstand, vorzugsweise einer Reißnadel, hergestellt werden kann. Beiden Enden der Lichtleitfasern $2_1$, $2_2$, .... $2_{10}$ ist jeweils ein länglicher Fotodetektor 53, 54 zugeordnet, und außerdem werden, wie in Fig. 4 erläutert, die Lichtleitfasern durch einen Lichtablenker von einer Lichtquelle periodisch beleutet. Aufgrund des Risses 52 sind die Lichtleitfasern $2_3$, $2_4$, $2_5$, $2_6$, $2_7$, $2_8$ in ihrem unteren Teil unterbrochen, so daß lediglich der Fotodetektor 53 beim Überstreichen der Unterbrechungen 50 jeweils einen Impuls pro Faser abgibt. Der Fotodetektor 54 gibt Impulse lediglich bei den Fasern $2_1$, $2_2$ und $2_9$, $2_{10}$ ab. Die Diagramme nach Fig. 3a und Fig. 3b zeigen die hierbei erzeugten Impulse. Da die Impulse des Fotodetektors 53 mit Rißzunahme zunehmend ausbleiben, kann mit den als Taktimpulsen verwertbaren Impulsen des Fotodetektors 53 und den Impulsen des Fotodetektors 54 in einer Auswerteschaltung eine Rißfortschrittanzeige erarbeitet werden.

Wie bereits erwähnt, ist zum periodischen Überstreichen der in den Lichtleitfasern 2 vorgesehenen Unterbrechungen 50 ein Lichtablenker erforderlich. Fig. 4 zeigt hierzu eine Spiegelrolle 55, die mit gleichmäßigen Abflachungen 56 versehen ist. Diese Spiegelrolle 55 ist mit einem nicht näher dargestellten Drehantrieb versehen und lenkt daher den von einem Laser 57 ausgehenden, über einen Umlenkungsspiegel 58 auf die Spiegelrolle 55 gerichteten Lichtstrahl 51 - wie angedeutet - quer über die auf einem Prüfling 1 aufgeklebten Lichtleitfasern 2 ab. Der Laserstrahl 51 ist dabei auf die Unterbrechungen 50 gerichtet und in der zuvor beschriebenen Weise durch eine zwischen dem Umlenkspiegel 58 und der Spiegelrolle 55 vorgesehene astigmatische Linse 60 fokussiert. Beim Drehen der Spiegelrolle 55 mit Hilfe eines Drehantriebs überstreicht daher der Lichtstrahl 51 des Lasers 57 periodisch die in den Lichtleitfasern 2 vorgesehenen Unterbrechungen 50, so daß an diesen Stellen den Fasern kurzzeitig Licht eingekoppelt wird.

Eine Auswerteschaltung, in der zum Beispiel ein Rechner vorgesehen sein kann, ist dabei in der Lage, aus den in Fig. 3a, 3b dargestellten Impulsen der Fotodetektoren 53, 54 ein Rißfortschrittdiagramm zu erstellen.

Ein solches Diagramm zeigt zum Beispiel Fig. 5, wo auf der Ordinate die Rißlänge und auf der Abszisse die Zahl der Lastwechsel aufgetragen ist. Die auf der Abszisse angegebenen Ziffern 1 bis 10 sind dabei den Indizies der Lichtleitfasern 2 nach Fig. 2 zugeordnet. Aus diesem Diagramm kann der Rißfortschritt mit der Zahl der Lastwechsel oder der Zeit erkannt werden, da die Lastwechsel der Zeit proportional sind. Das Aufbringen der Lichtleitfasern 2 in paralleler Ausrichtung kann dabei auf die in der deutschen Patentanmeldung P-3 142 392.2 beschriebenen Weise erfolgen.

## Patentansprüche

1. Meßanordnung zum Feststellen von Rissen (52) in Prüflingen mit einem zum Auslösen einer Rißanzeige dienenden und am Prüfling anbringbaren Rißdetektor, der aus auf den Prüfling aufklebbaren und über einen Lichteinkoppler mit Licht versorgbaren Lichtleitfasern besteht, dadurch gekennzeichnet, daß die Lichtleitfasern (2) in gleicher Höhe eine Unterbrechung (50) aufweisen, daß ein Lichtablenker (55) vorgesehen und so angeordnet ist, daß ein von ihm abgelenkter Lichtstrahl die Lichtleitfasern (2) in Höhe der Unterbrechung (50) überstreicht, so daß in beide Teile jeweils einer Faser Licht eingekoppelt wird und daß den Enden der Lichtleitfasern (2) Fotodetektoren (53, 54) zugeordnet sind, deren Ausgangssignale in einer Auswerteschaltung zur Erzeugung einer Rißfortschrittsanzeige verarbeitet werden.

2. Meßanordnung nach Anspruch 1, dadurch gekennzeichnet, daß zahlreiche Lichtleitfasern (2) im gleichmäßigen Abstand parallel am Prüfling (1) angebracht sind und daß die Unterbrechungen (50) hinreichend weit außerhalb der Mitte in den Lichtleitfasern (2) vorgesehen sind.

3. Meßanordnung nach Anspruch 1 oder 2, dadurch gekennzeichnet, daß für den Lichtablenker eine Drehspiegelanordnung eingesetzt ist, bestehend aus einer mit gleichmäßigen Abflachungen (56) versehenen Spiegelrolle (55).

4. Meßanordnung nach einem der Ansprüche 1 bis 3, dadurch gekennzeichnet, daß für die Lichtquelle ein Laser (57) eingesetzt ist, dessen Lichtstrahl (51) durch eine astigmatische Linse (60) in Ablenkrichtung fokussiert und in Faserrichtung defokussiert ist.

5. Meßanordnung nach einem der Ansprüche 1 bis 4, dadurch gekennzeichnet, daß die Fotodetektoren (53, 54) mehrere zu einem länglichen Bauteil zusammengefaßte Photodioden aufweisen und jeweils einer Seite der Faserenden zugeordnet sind.

6. Meßanordnung nach einem der Ansprüche 1 bis 5, dadurch gekennzeichnet, daß die Auswerteschaltung einen Rechner umfaßt, der aus den zugeführten Signalen der Fotodetektoren (53, 54) eine den Rißfortschritt anzeigende Größe ermittelt.

## Claims

1. Measurement apparatus for the detection of cracks (52) in test specimens, comprising a crack detector serving to trigger a crack display and unattachable to the test specimen, said crack detector consisting of optical fibres which can be stuck to the test specimen and be supplied with light via a light coupler, characterised in that the optical fibres (2) comprise at the same level an interruption (50) that a light deflector (55) is provided and so disposed that a light beam deflected by it sweeps the optical fibres (2) at the level of the opening (50) so that light is coupled into both parts of each fibre, and that there are assigned to the ends of the optical fibres (2) photodetectors (53, 54) whose output signals are processed in an evaluation circuit in order to generate a crack propagation display.

2. Measurement apparatus according to claim 1, characterised in that a large number of uniformly spaced, parallel optical fibres (2) are attached to the test specimen (1) and that the interruptions (50) are provided sufficiently off-centre in the optical fibres (2).

3. Measurement apparatus according to claim 1 or 2, characterised in that a rotating mirror arrangement is used as the light deflector, consisting of a mirror wheel (55) provided with uniform flattenings (56).

4. Measurement apparatus according to any one of claims 1 to 3, characterised in that a laser (57) is used as the light source, the light beam (51) of which is focussed in the deflection direction and defocussed in the fibre direction by means of an astigmatic lens (60).

5. Measurement apparatus according to any one of claims 1 to 4, characterised in that the photo-detectors (53, 54) comprise a plurality of photodiodes combined to form a longitudinal component and are each assigned to a side of the fibre ends.

6. Measurement apparatus according to any one of claims 1 to 5, characterised in that the evaluation circuit comprises a computer which determines from the signals supplied by the photo-detectors (53, 54) a value indicating the crack propagation.

**Revendications**

1. Dispositif de mesure pour déterminer la présence de fissures dans des éprouvettes avec un détecteur de fissures, servant à déclencher un affichage de fissure et susceptible d'être monté sur l'éprouvette, qui se compose de fibres optiques susceptibles d'être collées sur l'éprouvette et susceptibles d'être alimentées en lumière par l'intermédiaire d'une source de lumière, caractérisé en ce que les fibres optiques (2) présentent une interruption située à hauteur identique, en ce qu'il est prévu un déflecteur de lumière (55) et qu'il est disposé de façon qu'un rayon de lumière dévié par celui-ci balaie les fibres optiques (2) à hauteur de l'interruption (50), de façon que de la lumière soit introduite dans les deux parties de chaque fibre, et en ce que des photodétecteurs (53, 54) sont affectés aux extrémités des fibres optiques (2), leurs signaux de sortie étant traités dans un circuit d'exploitation pour produire une indication de progression de la fissure.

2. Dispositif de mesure selon la revendication 1, caractérisé en ce que de nombreuses fibres optiques (2) sont appliquées à intervalle régulier sur l'éprouvette (1) et que les interruptions (5) sont prévues suffisamment loin hors du centre dans les fibres optiques (2).

3. Dispositif de mesure selon la revendication 1 ou 2, caractérisé en ce qu'on utilise pour le déflecteur de lumière un agencement à miroir tournant, se composant d'un rouleau à miroirs (55) pourvus d'aplatissements (56) réguliers.

4. Dispositif de mesure selon l'une des revendications 1 à 3, caractérisé en ce qu'on utilise pour source de lumière un laser (57) dont le rayon lumineux (51) est focalisé en direction de la déviation au moyen d'une lentille astygmatique et défocalisée en direction de la fibre.

5. Dispositif de mesure selon l'une des revendications 1 à 4, caractérisé en ce que les photodétecteurs (53, 54) présentent plusieurs photodiodes assemblées en un élément de construction allongé et sont chaque fois affectés à un côté des extrémités de fibres.

6. Dispositif de mesure selon l'une des revendications 1 à 5, caractérisé en ce que le circuit d'exploitation comprend un ordinateur qui détermine à partir des signaux des photodétecteurs (53, 54) une grandeur indiquant la progression de la fissure.

FIG. 1a    FIG. 1b

FIG. 3a

FIG. 3b

FIG. 2

FIG. 4

FIG. 5

RiBlänge

Lastwechsel